Europäisches Patentamt

European Patent Office

Office européen des brevets

(19)

(11) Numéro de publication: **0 077 743**
**B1**

(12) ## FASCICULE DE BREVET EUROPEEN

(45) Date de publication du fascicule du brevet:
31.10.84

(51) Int. Cl.³: **F 16 L 37/08**

(21) Numéro de dépôt: 82420113.1

(22) Date de dépôt: 06.08.82

(54) Perfectionnements aux raccords rapides pour la jonction amovible des canalisations.

(30) Priorité: 20.10.81 FR 8119800

(43) Date de publication de la demande:
27.04.83 Bulletin 83/17

(45) Mention de la délivrance du brevet:
31.10.84 Bulletin 84/44

(84) Etats contractants désignés:
CH DE GB IT LI SE

(56) Documents cités:
FR - A - 1 503 989

(73) Titulaire: **S.A. DES ETABLISSEMENTS STAUBLI
(France), B.P. 20, F-74210 Faverges (FR)**

(72) Inventeur: **Palau, Joseph, Les Perris, F-74410 Duingt
(FR)**
Inventeur: **Burquier, Jean-Luc, "Les Presles" Menthon
Saint Bernard, F-74290 Veyrier du Lac (FR)**

(74) Mandataire: **Monnier, Guy et al, Cabinet
Monnier 142-150 Cours Lafayette, F-69003 Lyon (FR)**

BUNDESDRUCKEREI BERLIN

## Description

La présente invention est relative à des perfectionnements apportés aux raccords rapides destinés à assurer la jonction amovible des canalisations.

On sait que dans leur forme classique les dispositifs de ce genre comprennent généralement deux éléments mâle et femelle propres à s'emmancher de manière étanche l'un à l'intérieur de l'autre en provoquant l'ouverture d'un clapet d'obturation monté dans l'élément femelle, lequel est en outre pourvu d'un mécanisme de verrouillage agencé pour immobiliser axialement l'élément mâle à la position raccordée tout en étant susceptible d'être manœuvré par l'utilisateur en vue de la dissociation desdits éléments. Ce mécanisme est ordinairement constitué par un verrou chargé, mobile transversalement dans le corps de l'élément femelle et percé d'une ouverture propre à être traversée par l'extrémité ou embout de l'élément mâle; cette ouverture comporte une dent en saillie, profilée pour venir, sous l'effet des moyens élastiques associés au verrou, s'enclencher en arrière d'un épaulement annulaire prévu à cet effet sur l'élément mâle. Le verrouillage des éléments est ainsi opéré de manière automatique lors de l'emmanchement, le verrou d'immobilisation étant accessible sur la paroi extérieure de l'élément femelle afin de permettre son actionnement en vue du déverrouillage.

Cet agencement classique, qui donne satisfaction sur le plan de la robustesse et de la fiabilité, présente un inconvénient pratique non négligeable lorsque les canalisations à raccorder sont parcourues par un fluide sous une pression relativement élevée. En pareil cas en effet la détente du fluide qui, lors de la dissociation se trouve à l'état comprimé dans la canalisation reliée à l'élément mâle, produit par appui sur le clapet dès la manœuvre du verrou par l'utilisateur, l'expulsion brusque de cet élément en dehors du corps de l'élément femelle. La violence de cette expulsion peut être la cause de blessures plus ou moins graves pour le personnel environnant.

En vue de remédier à cet inconvénient, on a proposé (voir FR-A-1 503 989) de faire comporter au corps de l'élément femelle du raccord deux verrous indépendants décalés axialement l'un par rapport à l'autre de façon à ce que la dissociation des deux éléments implique obligatoirement deux manœuvres successives, des moyens de décompression étant prévus pour que l'espace intérieur de la canalisation associée à l'élément mâle soit relié à l'atmosphère à la fin de la première manœuvre. Toutefois les dispositions suggérées à cet effet sont de construction relativement complexe et peu fiable.

Les perfectionnements qui font l'objet de la présente invention ressortent du même concept fonctionnel, à savoir fournir un raccord dans lequel la dissociation ne peut intervenir qu'après deux manœuvres successives de déverrouillage afin de permettre l'échappement dans l'atmosphère du fluide comprimé dans la canalisation aval reliée à l'élément mâle du dispositif, étant cependant entendu que le raccord suivant l'invention allie la simplicité de réalisation pratique à un fonctionnement parfaitement sûr.

La présente invention est définie par la revendication et consiste essentiellement à faire comporter au verrou, lequel peut être prévu monobloc ou être au contraire formé par plusieurs pièces, trois dents décalées les unes par rapport aux autres le long de l'axe du corps de l'élément femelle, la dent centrale étant disposée à l'opposé des deux autres de façon à ce que la manœuvre initiale du verrou assure simultanément d'une part l'escamotage de la dent la plus intérieure en vue de la libération de l'élément mâle et d'autre part l'amenée de ladite dent centrale sur la trajectoire de l'épaulement de cet élément qui est ainsi arrêté et dont la libération définitive implique nécessairement d'abord le retour du verrou à sa position de repos qui escamote la dent centrale et qui amène la troisième dent sur la trajectoire de l'épaulement, puis une seconde manœuvre de la part de l'utilisateur pour l'escamotage de cette troisième dent.

On conçoit que les deux manœuvres successives du verrou requièrent un temps minimal incompressible qui suffit à l'opération de décompression, ce qui ne serait pas le cas si la libération définitive de l'élément mâle était obtenue par le simple retour du verrou à la position de repos. On est donc ainsi assuré d'éviter radicalement toute expulsion violente de l'élément mâle.

Le dessin annexé, donné à titre d'exemple, permettra de mieux comprendre l'invention, les caractéristiques qu'elle présente et les avantages qu'elle est susceptible de procurer:

Fig. 1 est une coupe axiale d'un raccord rapide établi conformément à la présente invention, les deux éléments étant représentés à la position verrouillée de raccordement.

Fig. 2 et 3 reproduisent fig. 1 à deux autres positions respectives des éléments.

Fig. 4 et 5 sont des coupes axiales analogues à celles de fig. 1, mais correspondant à deux variantes de mise en œuvre.

Fig. 6 montre à l'état séparé le verrou de la variante suivant fig. 5.

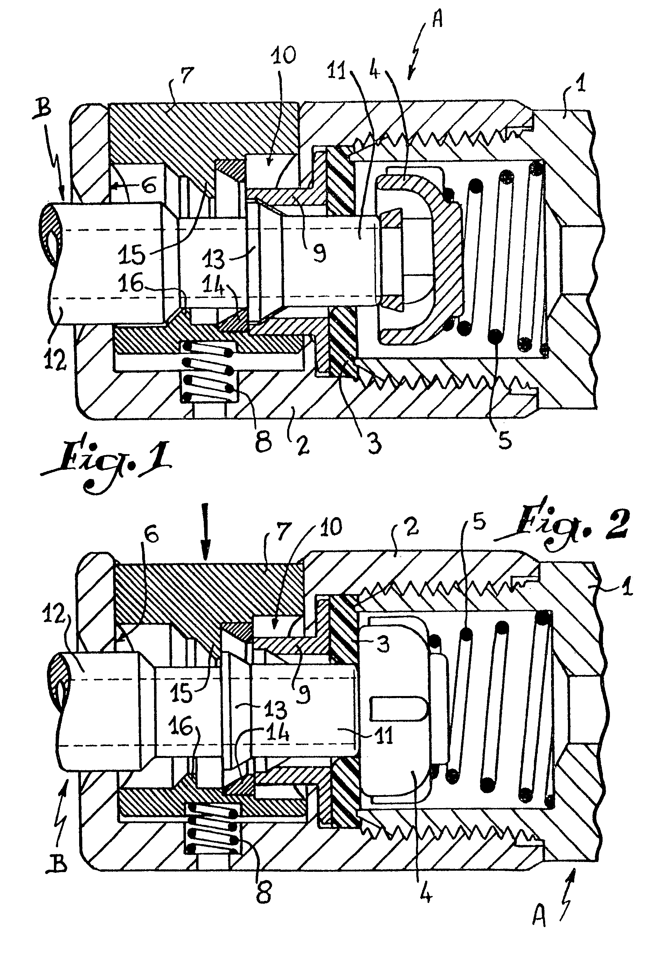

Le corps de l'élément femelle A du dispositif illustré en fig. 1 à 3 est constitué, à la façon en soi connue, par deux pièces tubulaires 1 et 2 assemblées l'une à l'autre par vissage, avec interposition d'un joint d'étanchéité 3 qui forme simultanément siège pour un clapet de fermeture 4 chargé par un ressort 5. En avant de ce joint 3 la pièce 2 présente un logement cylindrique 6 dont l'axe est orienté transversalement à celui du corps 1—2 et à l'intérieur duquel est monté à coulissement un verrou 7 qu'un ressort 8 tend à repousser vers l'extérieur; ce déplacement est limité par la collerette d'une bague 9 retenue en avant du joint 3, laquelle collerette est introduite dans le débouché arrière d'une ouverture 10 pratiquée dans le verrou 7. Cette ouverture 10 est orientée perpendiculairement à l'axe du verrou 7 de façon à permettre l'emmanchement de l'embout cylindrique 11 du corps tubulaire 12 de l'élément mâle B du dispositif, ledit embout comportant un épaulement annulaire 13 destiné à coopérer avec le verrou 7, ainsi qu'on le verra ci-après.

Conformément à l'invention l'ouverture 10 du verrou 7 présente trois dents en saillie, espacées les unes par rapport aux autres le long de l'axe de ladite ouverture, ces trois dents ayant été respectivement référencées 14, 15, 16. Il convient d'observer que la dent la plus intérieure 14 et la dent la plus extérieure 16 sont prévues suivant une même génératrice de l'ouverture circulaire 10, alors que la dent centrale 15 fait saillie sur une génératrice diamétralement opposée à celle correspondant aux deux dents précitées.

Le fonctionnement et l'utilisation du raccord rapide qui vient d'être décrit découlent des explications qui précèdent et se comprennent aisément.

L'opération d'emmanchement de l'élément mâle B à l'intérieur de l'élément femelle A s'effectue à la manière habituelle, en ce sens que la face antérieure à profil tronconique de l'épaulement 13 de l'embout 11 vient, lors du déplacement axial dudit embout à l'intérieur de l'ouverture 10 du verrou, porter successivement contre les faces antérieures, établies à un profil correspondant, des dents 16 et 14 dudit verrou qui est ainsi obligé de coulisser à l'encontre de son ressort 8. L'extrémité de l'embout 11 repousse le clapet 4 qui s'ouvre, en même temps que l'épaulement 13 vient finalement s'enclencher en arrière de la dent intérieure 14. L'élément mâle B est en conséquence fermement verrouillé axialement dans l'élément femelle A pour le raccordement des canalisations associées auxdits éléments (position de fig. 1).

Pour dissocier les deux éléments, l'utilisateur doit exercer une première pression sur le verrou 7, à l'encontre du ressort 8. Cette manœuvre provoque l'abaissement du verrou 7 et des deux dents 14 et 16, si bien que la dent intérieure 14 en s'escamotant libère l'épaulement 13 de l'embout 12, lequel se déplace axialement vers l'extérieur par suite de la portée, contre le clapet 4, du fluide sous pression contenu dans la canalisation associée à l'élément mâle B. Toutefois la manœuvre précitée du verrou a simultanément amené la dent centrale 15 à faire saillie sur la trajectoire d'expulsion de l'épaulement 13, si bien qu'elle arrête ce dernier et l'embout 11 à la manière illustrée en fig. 2.

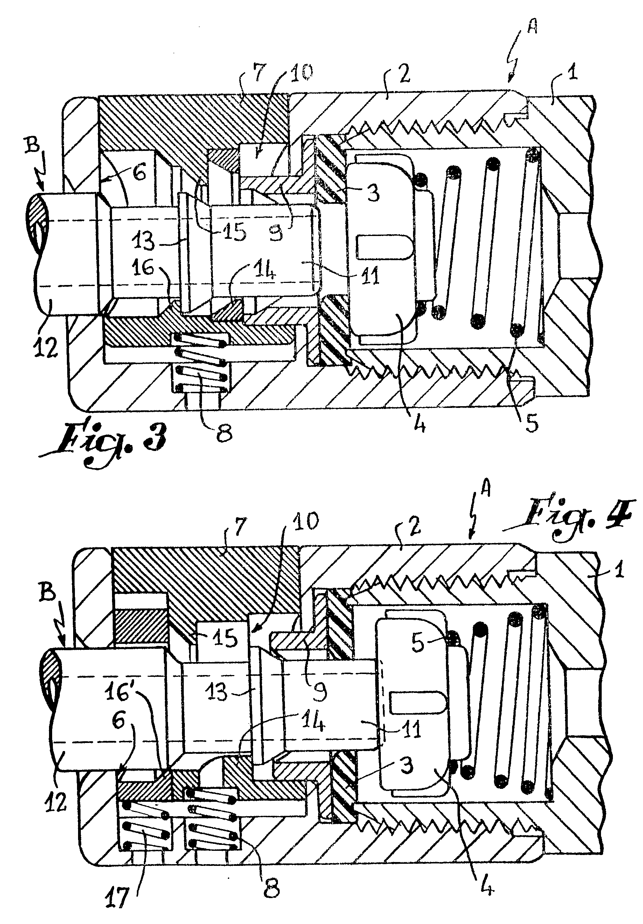

A ce moment il est indispensable que l'opérateur relâche sa poussée sur le verrou 7, de façon à laisser revenir celui-ci à sa position initiale sous l'effet du ressort 8. La dent centrale 15 s'escamote donc vers le haut, ce qui a pour conséquence de libérer à nouveau l'embout 12 qui peut continuer sa course de recul. Toutefois le retour du verrou en position haute a également eu pour conséquence de ramener la dent extérieure 16 sur la trajectoire de l'épaulement 13, si bien que ce dernier est arrêté par ladite dent, comme montré en fig. 3. On remarquera qu'à cette position l'extrémité de l'embout 12 se trouve disposée en avant du joint 3, de telle sorte que le fluide comprimé dans la canalisation aval associée à l'élément B peut s'échapper à l'extérieur.

La libération définitive de l'élément mâle B nécessite une nouvelle manœuvre de poussée de l'utilisateur sur le verrou 7; on conçoit en effet que l'abaissement de ce verrou assure à nouveau l'escamotage des dents 14 et 16, cette dernière ne s'opposant donc plus au retrait manuel de l'embout 12 hors de l'ouverture 10 du verrou. Dès qu'on relâche la poussée sur ce verrou, le ressort 8 opère le rappel de l'ensemble à la position initiale.

Ainsi qu'on l'a exposé plus haut, cette obligation d'exercer sur le verrou deux manœuvres successives de poussée séparées par un relâchement évite radicalement tout risque d'expulsion violente de l'élément mâle, et ce même dans le cas où l'utilisateur procèderait très rapidement: le laps de temps minimal impliqué par ces deux manœuvres est suffisant pour permettre l'échappement complet du fluide sous pression contenu dans la canalisation fixée à l'élément mâle.

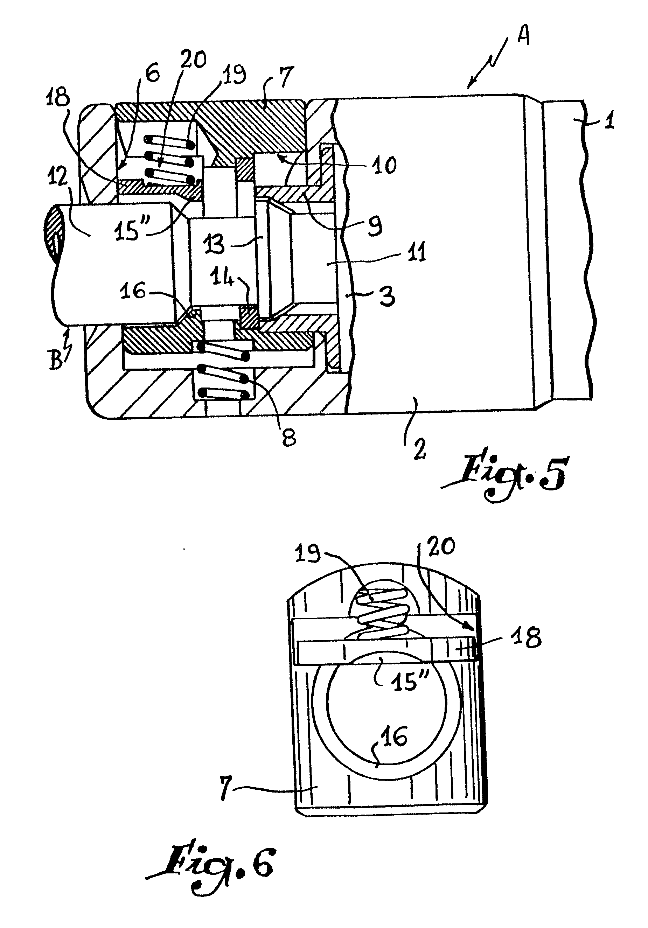

Dans la forme de réalisation illustrée en fig. 1 à 3 l'on a supposé qu'en vue de simplifier la fabrication du verrou, la dent intérieure 14 était formée par une bague indépendante rapportée dans un chambrage annulaire ménagé dans le débouché de l'ouverture 10 dudit verrou. Toutefois cette disposition n'a évidemment rien d'obligatoire et l'on peut très bien envisager un verrou constitué par une pièce unique convenablement agencée pour comporter directement les trois dents espacées longitudinalement dans l'ouverture 10. Dans la variante illustrée en fig. 4, les deux dents 14 et 15 sont directement formées dans l'ouverture 10 et c'est la dent extérieure, référencée 16', qui est constituée par une bague rapportée; l'on observera cependant qu'en pareil cas il y a lieu d'associer à cette bague ou dent 16', qui doit disposer d'un jeu radial suffisant pour permettre l'emmanchement initial de l'embout 11, un ressort de rappel 17 qui assure sa remontée après passage de l'épaulement 13 et lorsque le verrou 7 est relâché après la première manœuvre.

Fig. 5 et 6 illustrent une autre variante de mise en œuvre de l'invention dans laquelle le verrou comporte uniquement la dent extérieure 16, la dent intérieure 14 étant constituée par une bague indépendante (comme dans le cas de fig. 1 à 3) tandis que la dent centrale 15'' est portée par une plaquette indépendante 18 rapportée dans le corps 1−2. Comme illustré en fig. 6 qui montre le verrou vu par l'avart, cette plaquette 18, sollicitée par un ressort indépendant 19 qui tend à la maintenir en position abaissée pour laquelle sa dent 15'' se trouve disposée sur la trajectoire de l'épaulement 13 de l'élément mâle, prend appui latéralement contre les bords d'une chambre 20 prévue au-dessus de l'ouverture 10 pour permettre le déplacement vertical de la plaquette précitée.

Le fonctionnement des ces variantes de construction n'est pas modifié puisque dans tous les cas la présence des trois dents espacées dans l'ouverture du verrou oblige l'opérateur à procéder à deux manœuvres successives de poussée sur ledit verrou en vue de la libération totale de l'élément mâle.

## Revendication

Raccord rapide pour la jonction amovible de deux canalisations parcourues par un fluide sous pression, du genre comprenant un élément mâle (B) et un élément femelle (A) propres à s'emmancher axialement en provoquant l'ouverture d'un clapet (4) monté dans le corps de l'élément femelle (A), lequel corps est équipé d'un verrou (7) chargé monté à coulissement transversal dans le corps précité et percé d'une ouverture (10) pour l'emmanchement de l'élément mâle (B) pourvu d'un épaulement (13) annulaire de verrouillage, caractérisé en ce que la paroi de l'ouverture (10) du verrou (7) présente trois dents (14, 15, 16) décalées les unes par rapport aux autres le long de l'axe de ladite ouverture, la dent centrale (15) étant disposée à l'opposé des deux autres (14 et 16) de façon à ce que la manœuvre initiale du verrou assure simultanément d'une part l'escamotage de la dent la plus intérieure (14) en vue de la libération de l'épaulement (13) de l'élément mâle (B) et d'autre part l'amenée de la dent centrale (15) sur la trajectoire de cet épaulement (13) qui est ainsi arrêté et dont la libération définitive implique nécessairement tout d'abord le retour du verrou (7) à sa position de repos pour escamoter la dent centrale (15) et amener la troisième dent (16) du verrou (7) sur la trajectoire de l'épaulement (13), puis une seconde manœuvre de ce verrou (7) pour l'escamotage de cette troisième dent (16).

## Patentanspruch

Schnellkupplung zur lösbaren Verbindung von zwei von einem Druckfluid durchströmten Rohren, von der Art, welche umfaßt ein männliches Teil (B) und ein weibliches Teil (A), die axial ineinander steckbar sind und das Öffnen einer Klappe (4) bewirken, die in dem Körper des weibliches Elementes (A) angeordnet ist, welcher mit einem vorbelasteten Verriegelungsteil (7) ausgerüstet ist, welches quer verschiebbar in dem Körper angeordnet und mit einer Öffnung (10) zum Einstecken des männlichen Teils (B) durchbohrt ist, welches eine ringförmige Schulter (13) zur Verriegelung aufweist, dadurch gekennzeichnet, daß die Wand der Öffnung (10) des Verriegelungsteils (7) drei Zähne (14, 15, 16) aufweist, die jeweils zueinander längs der Achse der Öffnung versetzt sind, daß der mittlere Zahn (15) den zwei anderen (14 und 16) gegenüberliegend derart angeordnet ist, daß die Anfangshandhabung des Verriegelungsteils gleichzeitig einerseits das Einziehen des innersten Zahns (14) in Hinblick auf die Freigabe der Schulter (13) des männlichen Teils (B) und andererseits das Einführen des mittleren Zahns (15) in die Bewegungsbahn dieser Schulter (13) sicherstellt, welche somit arretiert ist und deren endgültige Freigabe notwendigerweise zunächst das Zurückkehren des Verriegelungsteils (7) in seine Ruhestellung, um den mittleren Zahn (15) einzuziehen und den dritten Zahn (16) des Verriegelungsteils (7) in die Bewegungsbahn der Schulter (13) zu führen, und dann eine zweite Handhabung dieses Verriegelungsteils (7) zum Einziehen dieses dritten Zahns (16) mit sich bringt.

## Claim

Quick-acting coupling for the disconnectable connection of two pipe lines through which runs a fluid under pressure, of the type comprising a male element (B) and a female element (A) suitable for fitting together axially and for the opening of a flap valve (4) mounted in the body of the female element (A), which body is equipped with a charged bolt (7) mounted so as to be slidable transversely in the above-mentioned body and formed with an opening (10) for the fitting of the male element (B) provided with an annular locking shoulder (13), characterized in that the wall of the opening (10) of the bolt (7) has three teeth (14, 15, 16) staggered in relation to each other along the axis of the said opening, the central tooth (15) being arranged opposite the two others (14 and 16) so that the initial manipulation of the bolt ensures simultaneously on the one hand the retraction of the innermost tooth (14) so as to release the shoulder (13) of the male element (B) and on the other hand to move the central tooth (15) onto the trajectory of this shoulder (13) which is thus stopped and the final release of which necessarily involves firstly the return of the bolt (7) to its position of rest to retract the central tooth (15) and movement of the third tooth (16) of the bolt (7) onto the trajectory of the shoulder (13), and secondly a manipulation of this bolt (7) for the retraction of this third tooth (16).

Fig. 1

Fig. 2

Fig. 3

Fig. 4

Fig. 5

Fig. 6